# EUROPÄISCHE PATENTANMELDUNG

(11) **EP 0 778 489 A1**
(43) Veröffentlichungstag der Anmeldung: **11.06.1997**
(21) Anmeldenummer: 96118145.0
(22) Anmeldetag: 13.11.1996
(51) Int. Cl.: G02F 2/02, G02F 1/37, G09F 13/20, G09F 13/18, H04N 9/31

(54) **Bildschirm, Verfahren zu seiner Herstellung sowie Verfahren und Vorrichtung zur Darstellung von Bildern auf einem Bildschirm**

(30) Priorität: 09.12.1995 DE 19546039
(71) Anmelder: Forschungsinstitut für mineralische und metallische Werkstoffe Edelsteine/Edelmetalle GmbH, 55743 Idar-Oberstein (DE)
(72) Erfinder: Rytz, Daniel Dr., D-55758 Herborn (DE)
(74) Vertreter: Weber, Dieter, Dr.

(57) **Zusammenfassung**

Die vorliegende Erfindung betrifft einen Bildschirm, mit einer optisch wirksamen Schicht (1), welche auf den Bildschirm gegebene Bildinformationen in ein für einen Betrachter sichtbares Bild umsetzt. Es wird erfindungsgemäß vorgeschlagen, daß die optische Schicht (1) aus einer Vielzahl von über die Bildschirmfläche verteilten Kristalliten (2) eines optisch nichtlinearen Materials besteht. Bei dem Herstellungsverfahren wird auf eine Trägerschicht, gegebenenfalls unter Zuhilfenahme eines a1äsionsmittels eine Schicht aus Kristalliten eines optisch nichtlineare n Materials aufgebracht. Das Darstellungsverfahren ist dadurch gekennzeichnet , daß diese Schicht entsprechend den vorgebenen Bildinformationen von einem oder mehreren Lasern überstrichen wird, deren Wellenlänge das Doppelte sichtbarer Wellenlängen beträgt. Trifft ein Laserstrahl in den einzelnen Bildpunkten auf Kristallite einer Orientierung, die zu einer Frequenzverdopplung des von dem Kristalliten ausgehenden Lichtes gegenüber dem auftreffenden Laserlicht führt, dann erfolgt die Emission von Sichtbarem Licht.

## Beschreibung

Die vorliegende Erfindung betrifft einen Bildschirm, ein Verfahren zu seiner Herstellung und auch ein Verfahren und eine Vorrichtung zur Darstellung von Bildern auf einem entsprechenden Bildschirm.

Allgemein hat ein Bildschirm, von welchem die vorliegende Erfindung ausgeht, eine optisch wirksame Schicht, welche auf den Bildschirm gegebene Bildinformationen in ein für den Betrachter sichtbares Bild umsetzt. Bei einem entsprechenden Verfahren zur Herstellung des Bildschirmes wird die optisch wirksame Schicht auf einem Trägermaterial aufgebracht. Diese Kriterien werden von herkömmlichen Fernsehbildschirmen oder Monitoren erfüllt, welche als optisch wirksame Schicht eine phosphoreszierende Schicht aufweisen, die von einem Elektronenstrahl zeilenweise überstrichen wird, wobei der Elektronenstrahl beim Auftreffen auf den Bildschirm die phosphoreszierende Schicht zum Leuchten bringt und so moduliert wird, daß durch leuchtende und nichtleuchtende Bildpunkte insgesamt ein Bild auf dem Bildschirm erzeugt wird. Bei Farbbildschirmen wird jeder Bildpunkt von drei kleinen Bildpunktflächen der Grundfarben rot, grün und blau gebildet, wobei eine Lochmaske sicherstellt, daß der einem Farbauszug zugeordnete Elektronenstrahl nur auf die Bildpunktflächen der zugehörigen Farbe auftrifft.

Weiterhin gibt es Bildschirme, die im wesentlichen nur reflektierende Projektionsflächen sind, wobei mit einer entsprechenden Optik die Farbauszüge im wesentlichen simultan auf die Projektionsfläche projiziert werden. Ein weiterer Typ von Bildschirmen ist der Flüssigkristallbildschirm, bei welchem jedem Bildschirmpunkt bzw. Pixel eine Flüssigkristallzelle zugeordnet ist, die durch Anlegen einer Spannung entweder optisch durchlässig oder undurchlässig wird.

Schließlich gibt es auch noch aktiv leuchtende Bildschirme, bei welchem jedes Pixel durch eine transistorgesteuerte Leuchtdiode gebildet wird. Auch dabei können durch Überlagerung der drei Grundfarben alle Farben des sichtbaren Spektrums erzeugt werden.

Die erstgenannten Fernsehbildschirme bzw. Bildröhren, die auch für Computermonitore verwendet werden, sind zwar in der Lage, ein gut aufgelöstes, helles Bild zu erzeugen, sind jedoch voluminös, haben eine aufwendige Elektronik, müssen notwendigerweise mit sehr hohen elektrischen Spannungen arbeiten und sind in der Herstellung relativ teuer.

Die bekannten Projektionssysteme erzeugen Bilder von nur mäßiger Helligkeit und Brillanz. Auch Kontrast und Konturschärfe der so erzeugten Bilder sind nur von mäßiger Qualität. Zwar gibt es prinzipiell die Möglichkeit, als Projektionsquelle auch Laser zu verwenden, dabei besteht jedoch das Problem, daß keine leicht verfügbaren und leicht handhabbaren Laser bekannt sind, die eine Wellenlänge bei jeweils einer der drei Grundfarben des sichtbaren Spektrums haben.

Zwar ist es prinzipiell möglich, mit Hilfe nichtlinearer Optiken durch Frequenzverdoppelung Laserstrahlung der gewünschten Wellenlänge zu erhalten, jedoch erfordert dies den Einsatz relativ großer und damit teurer Kristalle aus nichtlinearem optischem Material, die schwer herzustellen und auch thermisch relativ empfindlich sind und damit die mögliche Laserleistung begrenzen.

Flüssigkristallbildschirme haben häufig eine nur geringe Leuchtkraft und lassen auch keine schnellen Bildwechsel zu, was bei bewegten Bildern zu einem Nachleuchteffekt führt. Die aktiv leuchtenden TFT-Bildschirme sind wiederum sehr aufwendig und kompliziert, da sie an jedem Bildpunkt durch einen eigenen Transistor angesteuert werden müssen. Jeder Transistor benötigt seine individuellen Zuleitungen, so daß es bei derartigen Bildschirmen außerordentlich schwierig ist, die Pixeldichte und damit die Auflösung zu erhöhen. Auch diese Bildschirme sind daher relativ teuer in der Herstellung.

Gegenüber diesem Stand der Technik liegt der vorliegenden Erfindung die Aufgabe zugrunde, einen Bildschirm, ein Verfahren zu seiner Herstellung und Verfahren und Vorrichtungen zur Darstellung von Bildern auf einem solchen Bildschirm bereitzustellen, die die Bildschirmherstellung und die Darstellung von Bildern auf diesem Bildschirm erheblich vereinfachen und preiswerter machen, wobei der Bildschirm möglichst wenig Raum beanspruchen soll, ohne daß hinsichtlich der Bildhelligkeit oder der möglichen Auflösung bzw. Pixelzahl Beschränkungen in Kauf genommen werden müssen.

Hinsichtlich des Bildschirmes wird die der Erfindung zugrundeliegende Aufgabe dadurch gelöst, daß die optisch wirksame Schicht aus einer Vielzahl von über die Bildschirmfläche verteilten Kristalliten eines optisch nichtlinearen Materials besteht.

Das entsprechende Verfahren zur Herstellung eines solchen Bildschirmes ist dadurch gekennzeichnet, daß auf eine Trägerschicht, gegebenenfalls unter Zuhilfenahme eines Adhäsionsmittels, eine Schicht aus Kristalliten aus einem optisch nichtlinearen Material aufgebracht wird. Ein entsprechendes Verfahren zur Darstellung von Bildern auf einem solchen Bildschirm besteht darin, daß in an sich bekannter Weise der Bildschirm von mindestens einem Laserstrahl überstrichen wird, der auf der Basis vorgegebener Bildinformationen Bildpunkte erzeugt, die insgesamt entweder das Bild oder einen Farbauszug des Bildes darstellen, wobei dieses Verfahren erfindungsgemäß dadurch gekennzeichnet ist, daß ein Bildschirm verwendet wird, dessen optisch wirksame Schicht aus Kristalliten eines nichtlinearen Materials besteht, wobei diese Schicht entsprechend den vorgegebenen Bildinformationen von einem oder mehreren Lasern überstrichen wird, dessen bzw. deren Wellenlängen im Bereich des Doppelten des sichtbaren Wellenlängenspektrums liegt bzw. liegen und die an den jeweiligen Bildpunkten auf Kristallite einer Orientierung treffen, die zu einer Frequenzverdoppelung des von den Kristalliten ausgehenden Lichtes gegenüber dem auftreffenden Laserlicht führt.

Die entsprechende Vorrichtung weist daher mindestens einen Laser, vorzugsweise mindestens drei Laser verschiedener Wellenlänge auf, wobei diese Wellenlängen im Bereich des Doppelten des sichtbaren Spektrums liegen, und hat einen Bildschirm, dessen optisch wirksame Schicht aus Kristalliten eines optisch nichtlinearen Materials besteht sowie eine Optik, welche den Laserstrahl bzw. die Laserstrahlen entsprechend vorgegebenen Bildinformationen moduliert und auf den Bildschirm lenkt.

Durch den erfindungsgemäßen Bildschirm und die Verwendung der entsprechenden Infrarotlaser ist es möglich, die zur Verfügung stehenden und relativ leicht zu handhabenden Infrarotlaser mit Hilfe einer entsprechenden Optik unmittelbar auf den Bildschirm zu richten, z. B. in der üblichen zeilenweisen Abtastung, die auch von herkömmlichen Fernsehbildschirmen oder Projektionssystemen bekannt ist, wobei aufgrund der Vielzahl von Kristalliten eines nichtlinearen optischen Materials, welche auf dem Bildschirm verteilt sind, der Laserstrahl an jedem Bildpunkt, auf welchen er auftrifft, unter anderem auf einen Kristalliten mit einer Orientierung auftrifft, die die Bedingungen für die Frequenzverdoppelung des Laserlichtes erfüllt, was einer Wellenlängenhalbierung des Lichtes und damit einer Transformation des Laserlichtes in den optisch sichtbaren Bereich entspricht. Auf jedem Bildpunkt, auf welchem der Laser auftrifft und einen oder auch mehrere entsprechend ausgerichtete Kristallite vorfindet, entsteht also Licht der Farbe, die der halben Wellenlänge bzw. doppelten Frequenz des auftreffenden Laserlichtes entspricht. Durch Verwendung dreier verschiedener Laser, die jeweils das Doppelte der Wellenlängen einer der Grundfarben des optisch sichtbaren Spektrums haben (also das Doppelte einer roten bzw. einer grünen bzw. einer blauen Lichtwellenlänge) kann man einschließlich weiß alle Farben des sichtbaren Spektrums an jedem Bildpunkt erzeugen und hat damit einen neuen Typ von Farbbildschirm, der z. B in einer flachen ebenen oder auch gewölbten Form relativ einfach herstellbar ist, und auch ein Projektionssystem, was im Vergleich zu den bekannten Projektionssystemen selbst bei Verwendung extrem großer Bildschirme Bilder sehr guter Qualität erzeugt und dennoch nicht besonders aufwendig oder teuer ist. Laser der erforderlichen Wellenlängen sind leicht verfügbar und einfach in der Handhabung. Im Gegensatz zu Laserprojektionssystemen, die sichtbares Licht auf eine Leinwand oder sonstige Projektionsflächen projizieren, werden auch keine großen und teuren Einkristalle aus nichtlinearem Material oder andere, schwierig zu handhabende Lasersysteme benötigt. Statt also ein Bild mit sichtbarem Licht auf einer Projektionsfläche darzustellen, wird gemäß der vorliegenden Erfindung ein unsichtbares Licht, nämlich Infrarotlicht im Wellenlängenbereich, der dem Doppelten des sichtbaren Bereiches entspricht, verwendet und erst am Ort des Auftreffens des unsichtbaren Infrarotlichtes auf dem Bildschirm wird dieses durch Frequenzverdoppelung in sichtbares Licht umgewandelt. Mit Vorteil vermeidet man dadurch auchbei großen Bildschirmen, deren Bilder von der sichtbaren Seite her projiziert werden, daß in durchstrahlten Raum vor dem Bildschirm, durch Staub- oder Rauchpartikel störendes Streulicht entsteht. Dabei benötigt man für den Bildschirm nur relativ kleine Einkristalle aus einem optisch nichtlinearen Material, die im Rahmen der vorliegenden Patentanmeldung als "Kristallite" bezeichnet werden. Dabei werden insbesondere auch solche Kristalle von diesem Begriff "Kristallit" umfaßt, die nicht völlig einkristallin sind, sondern bei denen z. B. nur ein erheblicher Teil des Volumens einkristallin ist oder bei denen mehrere kleine Einkristalle unterschiedlicher Orientierung einstückig zusammenhängen, solange nur der oder die einkristalline(n) Bereich(e) für den Effekt der Frequenzverdoppelung groß genug ist (sind) und die Laserstrahlung nicht vollständig durch kleinere Kristallite absorbiert bzw. aus der optisch wirksamen Schicht heraus gestreut wird

Für die Funktion der Erfindung ist es wichtig, daß an nahezu jedem Bildpunkt mindestens ein Kristallit vorhanden ist, welcher die geeignete Winkelausrichtung zu einem auftreffenden Laserstrahl hat, um die Frequenz des Laserlichtes zu verdoppeln. Die Frequenzverdoppelung tritt im wesentlich auch dann noch ein, wenn der Kristallit, ausgehend von der idealen Ausrichtung, um wenige Grad gegenüber der Ideallinie verkippt ist, lediglich die Ausbeute an sichtbarem Licht kann dann gegenüber der idealen Ausrichtung etwas verringert sein. Wenn man die drei Farben des sichtbaren Spektrums darstellen will, versteht es sich, daß an jedem Bildpunkt mindestens drei Kristallite vorhanden sein sollten, von denen je einer für jeweils eine der drei Laserfrequenzen die richtige Winkelausrichtung hat.

Grundsätzlich wäre es denkbar, die Kristallite gezielt in ganz bestimmter Ausrichtung auf Bildpunkten unterzubringen. In einem solchen Fall wäre es eventuell auch möglich, weniger als drei Kristallite pro Bildpunkt anzuordnen, weil die unterschiedlichen Ausrichtungsbedingungen durch unterschiedliche Positionierung der Laserstrahlen bzw. der Ablenkoptik relativ zu einem einzigen Kristallit erfüllt werden könnten.

Die gezielt gerichtete Anbringung von Kristalliten auf dem Bildschirm erfordert jedoch einen hohen Aufwand und würde darüberhinaus auch die Herstellung im wesentlichen identischer Kristallite erfordern, um diese maschinell handhaben und anordnen zu können. Diese Variante ist deshalb weniger bevorzugt, soll jedoch vom Schutzbereich der vorliegenden Anmeldung umfaßt werden, da sich möglicherweise wegen der Vorteile der vorliegenden Erfindung gegenüber bekannten Systemen auch ein höherer Aufwand bei der Herstellung Iohnen könnte.

Im Vergleich dazu ist jedoch eine Ausführungsform der Erfindung bevorzugt, bei welcher die Kristallite in statistischer Verteilung bzw. Unordnung auf einem Trägermaterial aufgebracht bzw. in eine Einbettungsschicht eingebracht werden. In einem solchen Fall muß man lediglich dafür Sorge tragen, daß die Zahl der auf der Fläche eines Bildpunktes angeordneten Kristallite genügend groß ist, so daß praktisch sichergestellt ist, daß an jedem Punkt mindestens ein Kristallit und im allgemeinen mehrere zu finden sind, die jeweils für einen der Laserstrahlen die richtige Winkelausrichtung haben, um die Frequenz des auftreffenden Laserlichtes zu verdoppeln.

Aus diesem Grund ist eine Ausführungsform der Erfindung bevorzugt, bei welcher die Abmessungen der Kristallite wesentlich kleiner sind als die kleinsten auf dem Bildschirm darzustellenden Bildpunkte und bei welcher auf einer dem kleinsten darzustellenden Bildpunkt entsprechenden Fläche mindestens drei Kristallite mit unterschiedlicher relativer Orientierung ihrer Kristallachsen angeordnet sind, wobei man, wie erwähnt, mit der Mindestzahl von drei (oder weniger) Kristalliten nur dann auskommt, wenn man sie gezielt anordnet.

Andererseits ist jedoch auch darauf zu achten, daß die Kristallite eine Mindestgröße haben, die in etwa der kleinsten durch den Bildschirm wiedergegebenen Lichtwellenlänge entspricht. Der Effekt der Frequenzverdoppelung tritt nicht mehr ein, wenn die einzelnen Kristallite eindeutig kleiner sind als die kürzeste wiederzugebende Lichtwellenlänge.

Im Falle der statistischen Anordnung der einzelnen Kristallite sollte die durchschnittliche Anzahl von Kristalliten, die eine mindestens teilweise unterschiedliche relative Orientierung haben, auf der Fläche eines kleinsten Bildpunktes mindestens 10, vorzugsweise mehr als 50 betragen. Die Zahl der Kristallite pro Bildpunkt kann auch noch wesentlich größer sein, wenn sich herausstellt, daß man mit einer kleineren Zahl von Kristalliten die geforderte Bedingung, nämlich Auffinden von einem oder mehreren Kristalliten der richtigen Orientierung für jeden Laserstrahl auf jedem Bildpunkt, ansonsten nicht erfüllen kann. Aus dem vorstehend Gesagten ergibt sich, daß die mittlere Größe der zu verwendenden Kristallite, jedenfalls für die praktisch relevanten Bildschirmgrößen, zwischen 1 und 1.000 µm liegen sollte.

Dabei wird die mittlere Größe der verwendeten Kristallite u. a. auch durch die geforderte Auflösung und die Größe des betreffenden Bildschirmes festgelegt. Zu den Bildschirmen mit der besten Auflösung, die derzeit auf dem Markt relativ verbreitet sind, gehören z. B. Computermonitore mit einer Bildschirmdiagonalen von 17" und einer Auflösung von ca. 1.000 x 1.300 Pixeln auf einer Fläche von ca. 25 x 35 cm². Dies entspricht einer Bildpunkt- bzw. Pixelfläche von etwa 0,25 x 0,25 mm² bzw. 250 x 250 µ². Auf einer solchen Fläche haben z. B. in einer einlagigen Anordnung etwa 625 Kristallite einer mittleren Größe von 5µ Platz. Bei der gleichen Auflösung wird man daher für kleinere Bildschirme eher zu kleineren Kristallitgrößen übergeben, während man für deutlich größere Bildschirme auch größere mittlere Kristallitabmessungen wählen kann. Zweckmäßig ist es jedoch in allen Fällen, wenn die Größe der verwendeten Kristallite nicht allzu stark variiert, wenn also z. B. 90% des gesamten Kristallvolumens der Kristallite auf einem Bildschirm von solchen Kristalliten bereitgestellt bzw. gebildet wird, deren relative Größe im Vergleich zueinander sich höchstens um einen Faktor 5 unterscheidet. Mit anderen Worten, bei einer mittleren Kristallitgröße von 5 µ sollten 90% des Kristallvolumens von Kristalliten gebildet werden, die eine Größe zwischen 2 µ und 10 µ (oder auch zwischen 3 µ und 15 µ) haben. Dies kann man z. B. durch Sieben und Klassifizieren des pulverisierten Kristallmaterials erreichen.

Dabei ist es selbstverständlich möglich, die optisch wirksame Schicht auch deutlich dicker zu machen als es der mittleren Kristallitgröße entspricht, so daß also in der optisch wirksamen Schicht die Kristallite auch übereinander gestapelt liegen, so daß auf diese Weise auch bei Verwendung von Kristalliten, die im Vergleich zur Pixelfläche schon relativ groß sind, immer noch die Möglichkeit besteht, relativ viele Kristallite pro Pixelfläche anzuordnen, um so mit größter Wahrscheinlichkeit an jedem Bildpunkt die Bedingung für die Frequenzverdoppelung zu erfüllen. Die übrigen Kristallite, welche dann jeweils die Frequenzverdoppelungsbedingung nicht erfüllen, wirken dabei als Streuzentren auch für das durch die Frequenzverdoppelung entstehende sichtbare Licht, so daß ein Bildpunkt eines Bildschirmes auch aus verschiedenen Richtungen betrachtet im wesentlichen gleich hell erscheint. das gestreute Infralotlicht trifft dann möglicherweise noch andere Kristallite, welche die Orientierung für eine Frequenzverdoppelung haben.

Um die einzelnen Kristallite an ihren Platz zu fixieren, ist es zweckmäßig, wenn sie in eine optisch transparente Schicht eingebettet sind. Dabei können die Kristallite schon vor dem Aufbringen auf eine Trägerschicht mit einem entsprechenden Einbettungs- bzw. Klebemittel vermischt sein und als dünne Schicht auf eine Trägerschicht aufgetragen werden, oder es wird zunächst eine Adhäsionsschicht auf einer Trägerschicht aufgebracht und anschließend werden die Kristallite z. B. durch eine Sprühtechnik auf die Adhäsionsschicht aufgebracht und in diese eingebettet oder die Kristallite werden gemäß einer dritten Verfahrensweise zur Herstellung derartiger Bildschirme auf die Trägerschicht aufgebracht und anschließend mit einem Adhäsionsmittel abgedeckt und fixiert. Zweckmäßig ist es außerdem, wenn der Bildschirm in der Nähe zur optisch wirksamen Schicht auch eine gut wärmeleitende Schicht enthält. Z. B. kann im Falle eines transparenten Schirmes eine Trägerschicht aus Glas auf der zu beschichtenden Seite mit einer dünnen, noch transparenten Metallschicht bedampft sein. Im Falle eines von der Projektionsseite her zu betrachtenden Bildschirmes kann die Trägerschicht bzw. die von der Betrachtungsseite her gesehen rückwärtige Schicht der optisch wirksamen Schicht aus einer Metallfolie oder Metallplatte bestehen, die relativ gut wärmeleitend ist. Dieses ist insbesondere zweckmäßig und sinnvoll bei der Verwendung wärmeempfindlicher Kristallite, wie z. B. Kaliumniobat (KNbO₃), welches wegen seiner guten optischen Eigenschaften und der gut beherrschbaren Techniken zur Herstellung entsprechender Kristallite als nichtlineares optisches Material bevorzugt ist. Die Verwendung einer Metallfolie oder Metallplatte oder auch einer dünnen Metallschichtbedampfung hat im übrigen auch hinsichtlich der Herstellung des Bildschirmes den Vorteil, daß das Verfahren der elektrostatischen Pulverbeschichtung angewendet werden kann, was zu einer sehr gleichmäßigen Verteilung der Kristallite auf der metallischen bzw. metallisierten Oberfläche führt. Die typischen Schichtdicken der optisch wirksamen Schicht liegen in den Größenordnungen zwischen 2 und 100 µ, wobei die Schichtdicke bei Verwendung größerer Kristallite selbstverständlich auch noch erheblich gesteigert werden kann.

Weiterhin ist es zweckmäßig, wenn der Bildschirm mindestens auf der sichtbaren Serie der optischen Schicht eine für Ultraviolettstrahlung undurchlässige Schicht aufweist. Diese Bedingung wird im allgemeinen gut von Glas, wie es auch für herkömmliche Fernsehbildschirme verwendet wird, erfüllt. Die Wandstärke des Glases kann jedoch erheblich geringer sein als bei herkömmlichen Bildschirmen, die vor allem deshalb relativ dick sind, weil die Bildröhren evakuiert werden und der Bildschirm deshalb dem Atmosphärendruck standhalten muß.

Zusätzlich könnte auch noch eine transparente, Infrarotstrahlen absorbierende Schicht für die Laserstrahlung vorgesehen sein, welche die optisch wirksame Schicht ohne Frequenzverdoppelung passiert. Diese Schicht sollte jedoch wegen der in ihr entstehenden Wärme nicht in unmittelbarer Nachbarschaft zu der optisch wirksamen Kristallschicht angeordnet sein. Zur Kühlung wäre es auch möglich, z. B. ein Gebläse vorzusehen, welches eine Seite des Bildschirmes ständig mit Frischluft versorgt. In Extremfällen könnte auch eine Flüssigkeitskühlung des Bildschirmes vorgesehen werden, und zwar auf der der sichtbaren Seite abgewandten Seite der optisch wirksamen Schicht. Eine für Infrarotstrahlung undurchlässige, aber optisch transparente Schicht auf der sichtbaren Seite des erfindungsgemäßen Bildschirms ist unter Umständen auch unter Sicherheitsaspekten von großer Bedeutung, und käme gegebenenfalls bei von hinten mit Infrarotlasern bestrahlten Bildschirmen zum Einsatz. Abhängig von den zu verwendenden Laserenergien zur Erzeugung eines genügend hellen Bildes könnte je nach Ausgestaltung des Bildschirmes prinzipiell die Gefahr bestehen, daß ohne Verwendung einer für IR-Strahlung undurchlässigen Schicht auf der sichtbaren Seite des Bildschirmes eine für Menschen potentiell gesundheitsschädigende Infrarotstrahlung der Laser, die nicht in ihrer Frequenz verdoppelt wurde, auf einen Betrachter des Bildschirmes auftrifft.

Schließlich kann es u. U. wünschenswert sein, die optisch wirksame Schicht zur sichtbaren Seite des Bildschirmes hin noch mit einer Diffusorschicht abzudecken, damit sichergestellt wird, daß das an jedem Bildpunkt erzeugte, frequenzverdoppelte Licht im wesentlichen isotrop von jedem der Bildpunkte ausgeht. Eine Diffusorschicht kann auch auf der von der Laserstrahlung her beaufschlagten Seite der optisch wirksamen Schicht sinnvoll sein, wenn es dadurch möglich ist, die Laserstrahlung an jedem Bildpunkt unmittelbar vor der optisch wirksamen Schicht mehr oder weniger isotrop zu streuen, weil dann selbst bei einer kleinen Anzahl von Kristalliten an einem Bildpunkt die Frequenzverdoppelungsbedingung erfüllt werden kann. Dies ist insbesondere dann in Betracht zu ziehen, wenn man die Kristallite der einzelnen Pixel leicht gegeneinander abschirmen kann. Hierzu könnten z. die Kristallite mit Hilfe einer Maskentechnik pixelweise (d. h. in Form einzelner, getrennter Pixel) auf eine Trägerschicht aufgebracht werden. Wahlweise könnte das Material zwischen den Pixeln dann infrarotundurchlässig sein.

Hinsichtlich des Verfahrens zum Darstellen von Bildern mit einem entsprechenden Bildschirm und dementsprechend auch hinsichtlich der betreffenden Vorrichtung gibt es verschiedene Varianten, von denen einige bevorzugt sind. So sollte z. B. der Querschnitt der auf der optischen Schicht auftreffenden Infrarotlaserstrahlen nach Möglichkeit in etwa der Größe einer Bildpunkt- bzw. Pixelfläche entsprechen. Auf diese Weise wird sichergestellt, daß alle auf einem Bildpunkt vorhandenen Kristallite gleichzeitig von dem betreffenden Laserstrahl erfaßt werden, so daß insbesondere auch alle diejenigen Kristallite erfaßt werden, die bezüglich ihrer Ausrichtung die Frequenzverdoppelungsbedingung erfüllen.

Wenn die Zahl der auf einem Bildpunkt vorhandenen Kristallite relativ klein ist, so daß die Frequenzverdoppelungsbedingung für einen Laserstrahl nicht mit hinreichender Sicherheit auf jedem Bildpunkt bzw. Pixel erfüllt werden kann, oder auch generell zur Erhöhung der Helligkeit des Bildes kann es zweckmäßig sein, zwei Laser derselben Wellenlänge jedoch von unterschiedlichen Positionen aus dieselben Bildinformationen auf den Bildschirm bzw. die optisch wirksame Schicht schreiben zu lassen. Wegen ihrer unterschiedlichen Orientierung erfüllen jeweils andere Kristallite eines Pixels die Frequenzverdoppelungsbedingung für jeden der beiden Laserstrahlen, so daß das Erfüllen dieser Bedingung für mindestens einen von zwei Lasern eine größere Wahrscheinlichkeit hat als bei Verwendung nur eines Lasers. Selbstverständlich kann man auch einen gegebenen Laserstrahl lediglich aufspalten und über zwei verschiedene Optiken auf den Bildschirm projizieren, wodurch die Bildhelligkeit gegebenenfalls gleichmäßiger wird, wenn sie auch gegenüber der direkten Verwendung des Laserstrahls nicht insgesamt gesteigert wird.

Die zu erzielende Auflösung dürfte im allgemeinen nicht durch die Größe der verwendeten Kristallite, sondern eher durch den Querschnitt der verwendeten Laserstrahlung und das verwendete optische Ablenksystem für die Laserstrahlung begrenzt sein, mit welcher der Laserstrahl z. B. zeilenweise über den Bildschirm geführt und entsprechend den vorgegebenen Bildinformationen entweder ausgeblendet bzw. unterbrochen oder auf den Bildschirm projiziert wird. Zur Zeugung eines flimmerfreien Bildes benötigt man außerdem eine hohe Bildwiederholfrequenz mit entsprechenden Anforderungen an das optische System. Insofern kann es zweckmäßig sein, wenn für die Darstellung eines Bildes neben Lasern verschiedener Wellenlängen für die Wiedergabe der verschiedenen Farben auch mehrere Laser der jeweils selben Wellenlänge verwendet werden, wobei jeder dieser Laser nur einen Teilausschnitt des zugehörigen Bildes darstellt. Dieser Teilausschnitt kann wahlweise aus einem geschlossenen Bildteil, z. B. dem oberen linken oder einem anderen Viertel eines Bildschirmes entsprechen, es können jedoch auch z. B. zwei Laser derselben Farbe verwendet werden, die abwechselnd jede zweite Zeile eines Bildschirmes überstreichen, um dadurch die Wiederholfrequenz erhöhen zu können. Selbstverständlich kann man in einem solchen Fall auch mehr als zwei Laser verwenden um dann entsprechend der Anzahl n der Laser nur jeweils jede n-te Zeile von einem der Laser überstreichen zu lassen.

Weitere Vorteile, Merkmale und Anwendungsmöglichkeiten der vorliegenden Erfindung werden deutlich anhand der Beschreibung einer bevorzugten Ausführungsform und der dazugehörigen Figur.

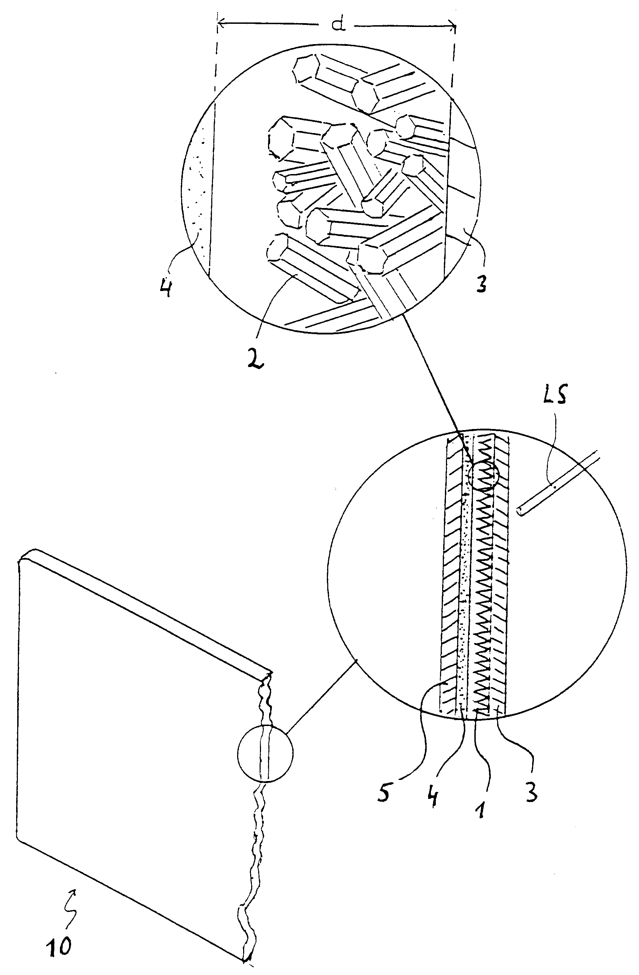

Die einzige Figur zeigt schematisch einen teilweise weggebrochen dargestellten Bildschirm, sowie in Ausschnitten stufenweise vergrößerte Schichten des Bildschirmes.

Der Bildschirm 10 besteht aus einer im allgemeinen ebenen Anordnung mehrerer Schichten. Es versteht sich, daß die Bildschirmoberfläche auf Wunsch auch leicht gewölbt sein kann. Die ebene, flache Form hat jedoch den Vorteil, daß man den Bildschirm z. B. wie ein Bild an eine Wand hängen kann, wenn die Laserstrahlen von der Vorderseite her auf den Bildschirm auftreffen.

In der schematisch dargestellten Variante besteht der Bildschirm 10 z. B. aus vier Schichten, nämlich einer optisch wirksamen Schicht 1, die aus regellos angeordneten Kristalliten 2 besteht und die auf einer Trägerschicht 3 aufgebracht ist, die z. B. aus Glas besteht. Dabei sollen die Kristallite 2 in der Schicht 1 in ein Kunststoffmaterial eingebettet sein, welches die Kristallite 2 in ihrer Ausrichtung und auf der Trägerschicht 3 fixiert. Auf der sichtbaren Seite des Bildschirmes 10 über der Schicht 1 ist eine Diffusorschicht 4 vorgesehen, die sicherstellen soll, daß das aus einem der Kristallite 2 austretende, frequenzverdoppelte Licht nicht gerichtet, sondern diffus bzw. isotrop von dem betreffenden Bildpunkt ausgeht.

Schließlich ist über der Diffusorschicht noch eine Schutzschicht 5 vorgesehen, die z. B. eine Glasplatte sein kann und gleichzeitig als Ultraviolettfilterschicht dient. Auch die rückwärtige Trägerschicht 3 kann eine Glasplatte sein. Schematisch angedeutet ist noch ein Laserstrahl LS, der den Bildschirm 10 zeilenweise abtastet und dabei entsprechende Bildinformationen auf die optische Schicht 1 überträgt.

Es versteht sich, daß die Darstellungen hier nur sehr schematisch sind und daß insbesondere die in dem oberen Ausschnitt der Figur dargestellten Kristallite weder die dargestellte hexagonale Struktur noch die gleichmäßige Säulenform mit ebenen Endflächen haben müssen. Die Kristallite des optischen Materials können auch deutlich abweichende Kristallstrukturen haben und die einzelnen Kristallite können an ihrer Oberfläche auch relativ unregelmäßig geformt sein. Die Darstellung im oberern Ausschnitt der Figur verdeutlicht jedoch, daß die einzelnen Kristallite willkürlich, d. h. in statistischer Unordnung ausgerichtet sind, so daß die jeweilige Zahl von Kristalliten in einem Bildpunkt ausreichend groß sein muß, damit mindestens einer von diesen die Frequenzverdoppelungsbedingung für einen Laserstrahl erfüllt.

## Patentansprüche

1. Bildschirm mit einer optisch wirksamen Schicht (1), welche auf den Bildschirm gegebene Bildinformationen in ein für einen Betrachter sichtbares Bild umsetzt, **dadurch gekennzeichnet, daß** die optische Schicht (1) aus einer Vielzahl von über die Bildschirmfläche verteilten Kristalliten (2) eines optisch nicht linearen Materials besteht.

2. Bildschirm nach Anspruch 1, **dadurch gekennzeichnet, daß** die Abmessungen der Kristallite wesentlich kleiner sind als die kleinsten auf dem Bildschirm darzustellenden Bildpunkte und daß auf einer dem kleinsten darzustellenden Bildpunkt entsprechenden Fläche mindestens 3 Kristallite mit unterschiedlicher relativer Orientierung ihrer Kristallachsen angeordnet sind, wobei die Mindestgröße der Kristallite in etwa der kleinsten, durch den Bildschirm wiedergegebenen Lichtwellenlänge entspricht.

3. Bildschirm nach Anspruch 1 oder 2, **dadurch gekennzeichnet, daß** die durchschnittliche Anzahl von Kristalliten mit mindestens teilweise unterschiedlicher relativer Orientierung auf der Fläche eines kleinsten Bildpunktes mindestens 10, vorzugsweise mehr als 50 beträgt.

4. Bildschirm nach einem der Ansprüche 1 bis 3, **dadurch gekennzeichnet, daß** die mittlere Größe der verwendeten Kristallite zwischen 0,5 und 1000 µm liegt.

5. Bildschirm nach einem der Ansprüche 1 bis 4, **dadurch gekennzeichnet, daß** 90 % des gesamten Kristallvolumens der Kristallite auf einem Bildschirm von Kristalliten bereitgestellt wird, deren Größe sich um höchstens einen Faktor 5 unterscheidet.

6. Bildschirm nach einem der Ansprüche 1 bis 5, **dadurch gekennzeichnet, daß** die Kristallite in eine optisch transparente Schicht eingebettet sind.

7. Bildschirm nach einem der Ansprüche 1 bis 6, **dadurch gekennzeichnet, daß** er in der Nähe zur optisch wirksamen Schicht (1) eine gut wärmeleitende Schicht (3) enthält.

8. Bildschirm nach einem der Ansprüche 1 bis 7, **dadurch gekennzeichnet, daß** die Kristallite der optischwirksamen Schicht aus KNbO₃ bestehen

9. Bildschirm nach einem der Ansprüche 1 bis 8, **dadurch gekennzeichnet, daß** er eine metallische Trägerschicht aufweist.

10. Bildschirm nach einem der Ansprüche 1 bis 8, **dadurch gekennzeichnet, daß** er eine Trägerschicht aus Glas oder transparentem Kunststoff aufweist.

11. Bildschirm nach einem der Ansprüche 1 bis 10, **dadurch gekennzeichnet, daß** er eine Abdeck bzw. Schutzschicht aus Glas oder transparentem Kunststoff aufweist.

12. Bildschirm nach einem der Ansprüche 1 bis 11, **dadurch gekennzeichnet, daß** er eine Diffusorschicht aufweist

13. Verfahren zum Herstellen eines Bildschirmes, bei welchem eine optisch wirksame Schicht auf einem Trägermaterial aufgebracht wird, **dadurch gekennzeichnet, daß** auf die Trägerschicht, gegebenenfalls unter Zuhilfenahme eines Adhäsionsmittels eine Schicht aus Kristalliten eines optisch nichtlinearen Materials aufgebracht wird.

14. Verfahren nach Anspruch 13, **dadurch gekennzeichnet, daß** die optisch wirksame Schicht mittels einer Spritztechnik auf die Trägerschicht bzw. auf ein auf der Trägerschicht aufgebrachtes Adhäsionsmittel aufgebracht wird.

15. Verfahren nach Anspruch 13, **dadurch gekennzeichnet, daß** die Trägerschicht aus einem elektrisch leitfähigen Material besteht oder mit einer Metallschicht versehen, z. B. bedampft, ist.

16. Verfahren nach Anspruch 15, **dadurch gekennzeichnet, daß** die optisch wirksame Schicht (1) nach dem Prinzip der elektrostatischen Pulverbeschichtung aufgebracht wird.

17. Verfahren nach einem der Ansprüche 13 bis 16, **dadurch gekennzeichnet, daß** die Kristallite durch Zerbrechen größerer Einkristalle hergestellt werden.

18. Verfahren nach einem der Ansprüche 13 bis 17, **dadurch gekennzeichnet, daß** die Kristallite gesiebt und klassifiziert werden, wobei für die Beschichtung Kristallite mit einer Teilchengröße zwischen 1 µ und 100 µ, vorzugsweise zwischen 2µ und 10µ, verwendet werden.

19. Verfahren nach einem der Ansprüche 13 bis 18, **dadurch gekennzeichnet, daß** die optisch wirksame Schicht in einer Dicke von mindestens 2 µ, vorzugsweise von mehr als 10 µ aufgebracht wird.

20. Verfahren nach einem der Ansprüche 13 bis 19, **dadurch gekennzeichnet, daß** zwischen der sichtbaren Fläche des Bildschirmes und der optisch wirksamen Schicht und/oder zwischen der Lserbestrahlunsseite und der optisch wirksamen Schicht eine Diffusorschicht vorgesehen ist.

21. Verfahren nach einem der Ansprüche 13 bis 20, **dadurch gekennzeichnet, daß** die optisch wirksame Schicht und eine gegebenenfalls vorhandene Diffusorschicht nach außen hin durch eine optisch transparente Schutzschicht abgedeckt sind.

22. Verfahren nach Anspruch 21, **dadurch gekennzeichnet, daß** die Schutzschicht eine auf die darunter liegenden Schichten aufgeklebte Glas- oder Kunststoffplatte ist.

23. Verfahren zum Darstellen von Bildern, insbesondere Farbbildern, auf einem Bildschirm, bei welchem der Bildschirm von mindestens einem Laserstrahl überstrichen wird, der auf der Basis vorgegebener Bildinformationen Bildpunkte erzeugt, die insgesamt das Bild oder einen Farbauszug des Bildes darstellen, **dadurch gekennzeichnet, daß** ein Bildschirm verwendet wird, dessen optisch wirksame Schicht aus Kristalliten eines optisch nichtlinearen Materials besteht, und daß diese Schicht entsprechend den vorgebenen Bildinformationen von einem oder mehreren Lasern überstrichen wird, deren Wellenlänge das Doppelte sichtbarer Wellenlängen beträgt und als die an den Bildpunkten auf Kristallite einer Orientierung treffen, die zu einer Frequenzverdopplung des von dem Kristalliten ausgehenden Lichtes gegenüber dem auftreffenden Laserlicht führt.

24. Verfahren nach Anspruch 23, **dadurch gekennzeichnet, daß** der Laser bzw. die Laser eine bzw. mehrere der Wellenlängen hat bzw. haben, die das doppelte der Wellenlängen von blauem oder grünem oder rotem Licht betragen.

25. Verfahren nach Anspruch 23 oder 24, **dadurch gekennzeichnet, daß** mehrere Laser einer Wellenlänge vorgesehen sind, welche im wesentlichen simultan den Bildschirm nach denselben Bildinformationen überstreichen.

26. Verfahren nach Anspruch 23 oder 24, **dadurch gekennzeichnet, daß** mehrere Laser derselben Wellenlänge vorgesehen sind, welche jeweils einen Teilbereich des Bildschirmes nach den für diesen Teilbereich gegebenen Bildinformationen überstreichen.

27. Verfahren nach einem der Ansprüche 23 bis 26, **dadurch gekennzeichnet, daß** Infrarotlaser der Grundwellenlängen von etwa 1,3, 1,0 und 0,9 µm verwendet werden.

28. Verfahren nach einem der Ansprüche 23 bis 27, **dadurch gekennzeichnet, daß** der Bildschirm insgesamt lichtdurchlässig ist und von seiner Rückseite her mit Laserstrahlen überstrichen wird.

29. Verfahren nach einem der Ansprüche 23 bis 27, **dadurch gekennzeichnet, daß** der Bildschirm von der sichtbaren Seite her mit Laserstrahlen beaufschlagt wird.

30. Verfahren nach Anspruch 29, **dadurch gekennzeichnet, daß** die Rückseite bzw. Trägerschicht der optischen Schicht eine Infrarotwellenlängen reflektierende Schicht ist.

31. Vorrichtung zum Darstellen von Bildern auf einem Bildschirm, **dadurch gekennzeichnet**, **daß** sie mindestens einen Infrarotlaser und vorzugsweise mindestens drei Infrarotlaser verschiedener Wellenlänge aufweist, wobei die Wellenlängen in dem Bereich liegen, der dem Doppelten des sichtbaren Spektrums entspricht, **dadurch gekennzeichnet, daß** die Vorrichtung weiterhin einen Bildschirm nach einem der Ansprüche 1 bis 12 und eine Ablenkoptik aufweist, welche die Infrarotlaserstrahlen, modiliert auf der Basis von Bildinformationen, auf den Bildschirm bzw. auf die optisch wirksame Schicht des Bildschirmes lenkt.

32. Vorrichtung nach Anspruch 31, **dadurch gekennzeichnet, daß** der Bildschirm lichtdurchlässig ist und die Laser bzw. deren Ablenkoptik hinter dem Bildschirm angeordnet sind.

33. Vorrichtung nach Anspruch 31, **dadurch gekennzeichnet, daß** ein Bildschirm mit einer reflektierenden Rückwand bzw. Trägerschicht verwendet wird und die Laser bzw. deren Ablenkoptik auf der sichtbaren Seite des Bildschirmes angeordnet sind.

34. Vorrichtung nach einem der Ansprüche 31 bis 33, **dadurch gekennzeichnet, daß** jeweils mehrere Laser oder mehrere in unterschiedlichen Positionen relativ zum Bildschirm angeordnete Ablenkoptiken für den Laser vorgesehen sind, welche dieselben Bildinformationen simultan aus verschiedenen Richtungen auf die optisch wirksame Schicht des Bildschirmes projizieren.

35. Vorrichtung nach einem der Ansprüche 31 bis 33, **dadurch gekennzeichnet, daß** mehrere Laser derselben Wellenlänge oder mehrere Ablenkoptiken, gegebenenfalls mit eigenen Modulatoren vorgesehen sind, welche jeweils einen Teilbereich eines Bildschirmes mit den zu diesem Teilbereich behörigen Bildinformatinen überstreichen.
